# EUROPEAN PATENT SPECIFICATION

(11) **EP 2 692 105 B1**
(45) Date of publication and mention of the grant of the patent: **19.07.2017**
(21) Application number: 11711096.5
(22) Date of filing: 30.03.2011
(51) Int. Cl.: H04W 28/02, H04L 29/06, H04L 29/08, H04W 28/22

(54) **ADAPTIVE RATE TRANSMISSION OVER A RADIO INTERFACE**
ADAPTIVE RATENÜBERTRAGUNG ÜBER EINE FUNKSCHNITTSTELLE
DÉBIT DE TRANSMISSION ADAPTATIF SUR UNE INTERFACE RADIO

(43) Date of publication of application: 05.02.2014
(73) Proprietor: Telefonaktiebolaget LM Ericsson (publ), 164 83 Stockholm (SE)
(72) Inventor: WESTBERG, Lars, S-745 96 Enköping (SE); FOLKE, Mats, S-977 51 Luleå (SE); VIRKKI, Vesa, FI-02420 Jorvas (FI)
(74) Representative: Boco IP Oy Ab
(86) International application number: PCT/EP2011/054907
(87) International publication number: WO 2012/130298

(56) References cited:
- EP-A1- 1 978 716
- ANONYMOUS: "Optimized Delivery of Audio&Video Streaming over Wireless Networks", INTERNET CITATION, 21 December 2006 (2006-12-21), XP002457797, Retrieved from the Internet: URL:http://www1.alcatel-lucent.com/podcast /innovation/pdf/audiovideo_stre aming.pdf [retrieved on 2007-11-06]
- XIAOLING QIU ET AL: "Optimizing HTTP-based Adaptive Video Streaming for wireless access networks", BROADBAND NETWORK AND MULTIMEDIA TECHNOLOGY (IC-BNMT), 2010 3RD IEEE INTERNATIONAL CONFERENCE ON, IEEE, 26 October 2010 (2010-10-26), pages 838-845, XP031889219, DOI: 10.1109/ICBNMT.2010.5705208 ISBN: 978-1-4244-6769-3

## Description

### Technical Field

The present invention relates to adaptive rate transmission over a radio interface and in particular, though not necessarily, to such transmission over a radio interface of a cellular telecommunications network.

### Background

Media streaming is commonly used to deliver media such as video (including an audio component) to end users over the Internet. A property of streaming media is that it is substantially continuously received at an end user's device and is immediately played out. A buffer is typically employed at the end user's device or "client" in order to smooth out fluctuations in the data reception rate and/or to compensate for a reception rate that is below or higher than the desired play out rate.

As cellular network operators strive to compete with fixed network operators for Internet access business, much work has been undertaken to increase the efficiency and quality of streaming media over cellular networks. In the case of Wideband Code Division Multiplex Access (WCDMA) based networks supporting High Speed Packet Access (HSPA), a so-called "streaming" Radio Access Bearer (RAB) has been specified for the purpose of transporting streaming media over the radio interface. However, a streaming RAB can only be used if the User Equipment (UE) has support for the streaming bearer. This is not the reality today. In this case, UEs must rely upon application layer control, and which is used regardless of access network type and in particular without direct knowledge of the access network conditions.

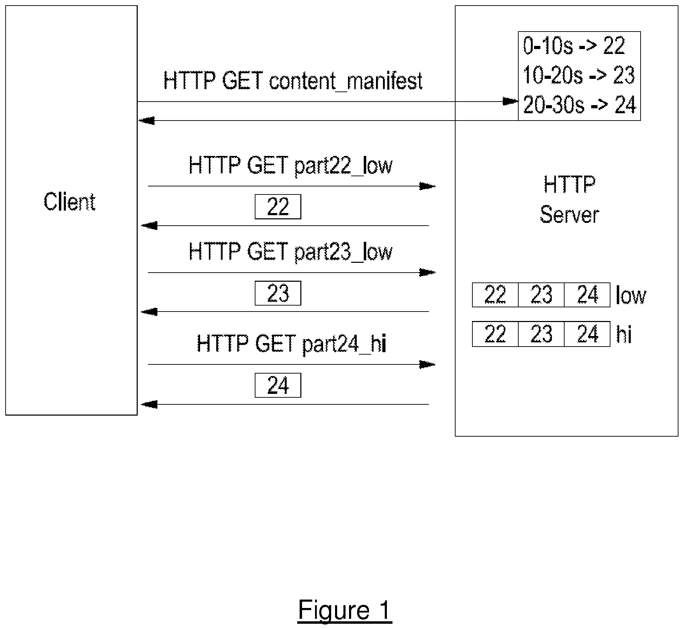

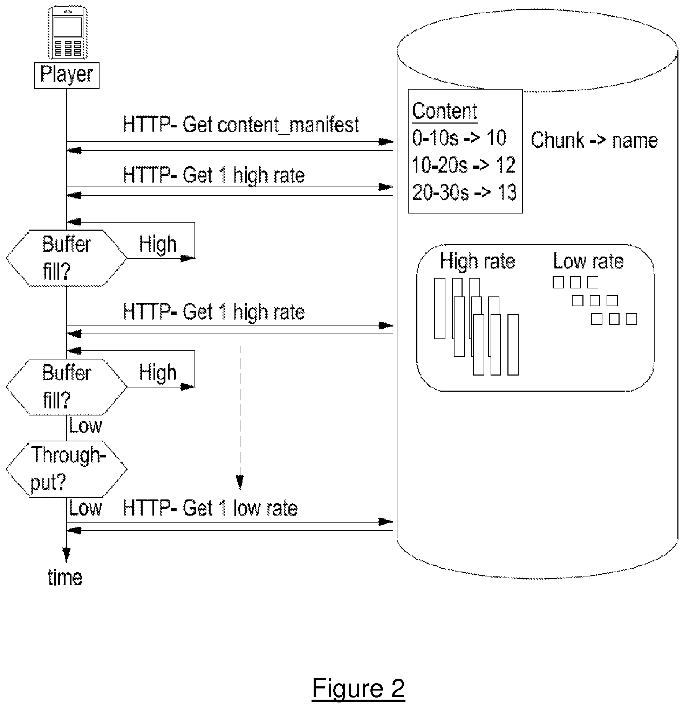

Considering further this application layer control of streaming media, the current trend is to use adaptive streaming for downloading information. Adaptive streaming requires a media player (e.g. web browser) within a client terminal to be provided with some mechanism (e.g. a browser plugin) for instructing the streaming media source to adapt the transmission according to current conditions as observed by the client terminal. For example, an example adaptive streaming mechanism may operate as follows:
Before the streaming media session starts, a file (denoted here as a "manifest") is downloaded from the streaming server to the client. The manifest contains a list of Uniform Resource Locators (URLs) that the client can choose to download from. A sequence of URLs together provide the entire media session, i.e. each URL corresponds to a chunk of the media session. Additionally, for each chunk, the manifest contains two or more URLs, each mapping to a different coding rate. The client selects a URL for the first data chunk and continuously downloads from that URL whilst monitoring the (TCP) throughput. The client chooses a next chunk with coding rate based on the last chunk throughput. This next chunk is requested when the buffer fill level is low. Figure 1 illustrates this adaptive streaming procedure, whilst Figure 2 illustrates in more detail the decision process carried out at the client.

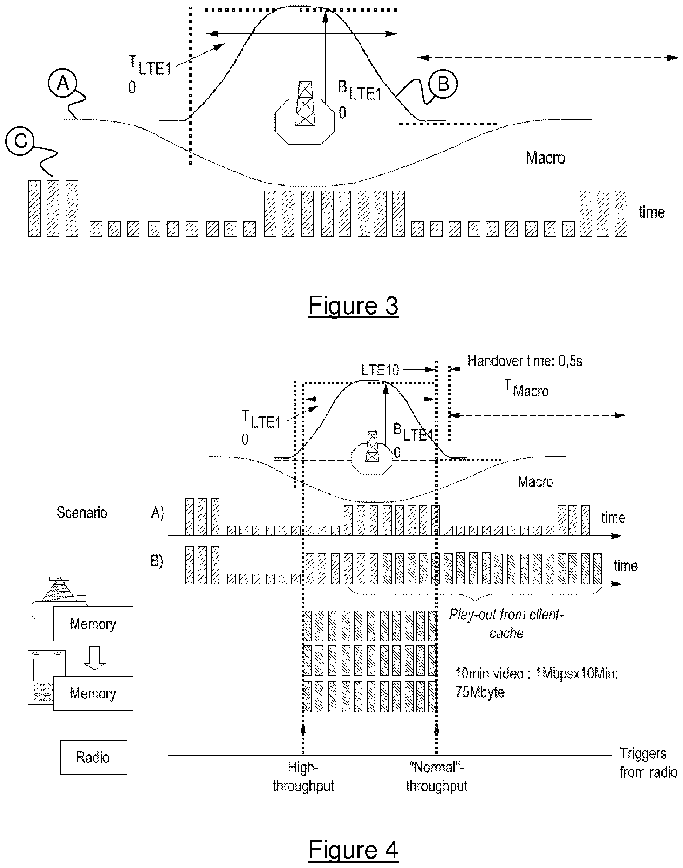

It will be appreciated that the known adaptive streaming mechanisms are based on measuring the throughput from the network and selecting the appropriate transmission (i.e. coding) rate. In the case of a client UE making use of a cellular access network, the rate is likely to be changed to a lower rate when the radio conditions worsen, e.g. due to the presence of an increased number of users within a given cell. Similarly, as a mobile user moves across a network and between different network technologies, conditions including available bandwidth will vary. This situation is illustrated in Figure 3, where legend A illustrates the capacity available to a user across a standard LTE network, whilst legend B illustrates the capacity available across an advanced LTE hotspot. The bars at the bottom of the Figure, identified by the legend C, illustrate that, in the centre of the adjacent standard LTE cells (i.e. at the extreme left and right locations), a very high bandwidth is available to the user allowing high quality, low compression rate chunks to be transferred to the user. As the user moves towards the standard cell boundaries, bandwidth falls, forcing the user to download only low quality, high compression rate chunks. Right on the cell boundary though, the hotspot becomes available, and the user can switch to higher quality chunks. However, other than requesting an increased rate when throughput is high, the existing application level mechanisms do not allow advantage to be made of currently un-used radio capacity in the cellular access network to ensure the future quality of the streaming media and to improve the quality of the media over the whole session. The radio layer, and in particular nodes within the radio layer such as the Radio Network Controller (RNC) within UMTS networks, is transparent to the known adaptive streaming mechanisms.

EP 1978716 A1 discusses a system for dedicatedly transferring content to at least one mobile terminal (UE). The system is configured to connect to a radio network, such as a radio access network (RAN), and further configured to implement a batch content transfer mechanism in a non-uniform radio coverage. The system comprises i) a first device (D1) located upstream of the radio access network (RAN) and having a first memory (M1) that can temporarily store content. The first device (D1) includes a controller (CS1) to monitor the storage in the first memory (M1), to efficiently store content(s) received from a content server (CS). Further, the first device is configured to extract content(s) stored in the first memory (M1) for transfering to an application (LC) in the form of data blocks. The system further comprises ii) at least a second device (D2) located in the terminal (UE) and to monitor access to a second memory (M2) that can store content. The second device (D2) is controlled by a controller (CS2), wherein the controller (CS2) is used by the application (LC) to interact with the first device (D1), and the controller (CS2) is further used at the protocol layer temporary storage to allow the batch transfer of content(s) of the first memory (M1) to the second memory (M2) and to the application (LC).

XP-002457797 discusses about a problem faced by mobile network operators to handle many end users simultaneously assuring a good user experience, with a limited bandwidth of network being available. An approach to record streaming applications is porposed, which is based on cache mechanisms and exploits the full radio resource of the mobile network in an efficient way. To provide an uninterrupted video service with a given Quality of Service, a solution which utilizes a streaming proxy to hide the discontinuity of the delivery to the streaming protocols (RTP/RTCP, RTSP) is discussed. A storage function of the streaming content delivered by the video server in the network cache is used. Further, a quick terminal cache-filling mechanism is used at the beginning of the session, to ensure that no interruption occurs once the service has started. Furthermore, a specific cache scheduling is utilized, which serves each terminal by variable quanta according to criteria such as the terminal cache level and its position (in the transfer zone or not). The scheduler policy favors delivery to the set of terminals in the transfer zone. Nevertheless, the terminals with empty cache (e.g., static users) are given high priority even if they are not in a transfer zone. This limits the number of starvation situations. Further, a reliable cache transport protocol lies between the network cache and the terminal cache. In the control plane, each terminal sends some information relative to its cache status and its position. This solution allows an up to twofold increase in the number of users experiencing video service.

### Summary

According to a first aspect of the present invention there is provided a radio layer apparatus as defined by independent claim 1. According to a second aspect of the present invention there is provided a wireless device as defined by independent claim 8. According to a third aspect of the present invention there is provided a method as defined by claim 9. Embodiments of the invention may take advantage of spare capacity available on the radio interface to "pre-load" a local buffer with unrequested data in anticipation of the need for that data.

Embodiments of the present invention may provide improved quality for end-users in the case of streaming media. In the case of other data transfers, embodiments may result in a faster and more efficient transfer of the data. Embodiments of the present invention may also make for a more efficient use of bandwidth over the radio interface, potentially reducing traffic during periods of congestion.

### Brief Description of the Drawings

Figure 1 illustrates schematically a known, manifest-based approach to downloading a block of data to a wireless device;
Figure 2 illustrates the approach of Figure 1 in more detail;
Figure 3 illustrates schematically how changes in wireless network capacity impact on the quality of data transmitted to a wireless device when employing a manifest-based approach to data transfer;
Figure 4 illustrates schematically how an improvement in data quality can be achieved in a wireless network;
Figure 5 illustrates functional components within a wireless device (UE) and a Radio Base Station (RBS);
Figure 6 illustrates a procedure for downloading a video to a wireless device with the architecture of Figure 5;
Figure 7 is a flow diagram further illustrating the procedure of Figure 6;
Figure 8 illustrates schematically a radio layer node such as an RNC or eNB; and
Figure 9 illustrates schematically a wireless device such as a UE.

### Detailed Description

As has been discussed above, current application layer adaptive mechanisms for delivering streaming media via a cellular or other radio access network are able to take account only of throughput conditions perceived by the client terminal or User Equipment (UE). Therefore, if throughput is currently high, e.g. due to a low number of users within a given cell, a UE is only able to download a current chunk (of the streaming media) at a high rate and is unable to make use of remaining un-used capacity. It is recognised here that such un-used capacity can be used to download as yet unrequested chunks of the media session in parallel with the requested chunks. To facilitate this, the radio layer node responsible for the radio interface monitors radio conditions and controls the parallel downloading. Of course, the radio layer node should have a knowledge of future and already downloaded chunks. The downlink scheduler within the radio layer node can use this information to schedule UEs that have good radio condition more often than UEs that have bad radio condition in order to fill the buffers of the former UEs to give improved Quality of Experience at least those UEs.

In the case of a UMTS architecture comprising a UMTS Terrestrial Radio Access Network (UTRAN), the Radio Network Controller (RNC) of the UTRAN may play the role of the radio layer node referred to above, i.e. it is the RNC which monitors the radio conditions, requests future data chunks, and schedules these chunks for transmission to the UEs. Considering Long Term Evolution (LTE) architectures, it is the enhanced Node B (eNB) which plays the role of the radio layer node. Of course, this does not exclude the possibility that the radio layer node may be a separate node within the radio access network coupled to the RNC or eNB. In the following discussion, reference is made to a generic Radio Base Station (RBS). This term encompasses, for example, an RNC and an eNB.

The approach presented here can be seen as a memory-to-memory transfer between two nodes, i.e. the radio layer node (RBS) and the UE. The "memory" here describes a function that can store information which is transferred over the radio interface. This approach is shown in Figure 4 which illustrates a transfer between a memory (cache) in the network and a memory (buffer) in the UE. [It is assumed that the memory in the UE is able to store more information than it currently uses for playing-out.] The triggering of the transfers is made by a "free" capacity indication generated by radio logic within (or coupled to) the radio layer node. Scenario A) in Figure 4 corresponds to that shown in Figure 3, whilst scenario B) illustrates that parallel data transfer taking place when the UE is within the coverage of the LTE hotspot, allows the UE to play out high quality data from the local buffer even after the UE has moved out of the hotspot.

It will be appreciated that, according to current cellular network architectures such as UMTS, the UE performs regular radio condition measurements and reports these to the network. In UMTS, these reports are known as Channel Quality Indicator (CQI) reports. CQI reports are already used as inputs for some downlink schedulers, but the proposal here is to make use of this information to trigger the downloading of as yet unrequested chunks to the UE. In addition, memory fill-level information can be provided by the client to the network and this information used in the scheduling decision.

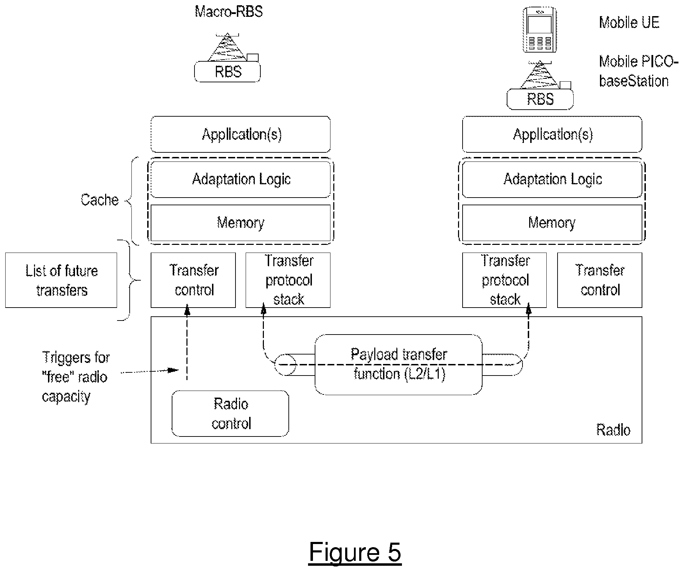

Figure 5 illustrates a system architecture for implementing this adaptive streaming mechanism, where the following functional components are shown (present in both the UE and Radio Base Station (RBS) unless otherwise stated):
Application: Example applications are storage, web browser, web proxy.
Cache: A function that includes the storage and application adaptation logic such that the application can store objects in the memory. In particular, the cache comprises,
   Adaptation logic: This performs adaptation between the memory and the Application. From an application perspective the memory and adaptation logic can be a browser cache or a file-system.
Transfer Protocol stack: The main function of this entity is to fetch an object from the memory and encapsulate the object using a transferable protocol encapsulation mechanism. One example could be a TCP/IP stack.
Transfer control: This is a function that initiates a transfer between the two memories. The transfer control also includes an object:
   Item "list of future transfers": An assumption made here is that this list is created by the application and sent to the "cache", i.e. the object is available both to the UE and to the RBS.
   Item "List of stored objects": The adaptation for a web browser also includes a list of the current stored objects such that a web browser can check whether or not required content is stored in the cache.
Radio-control: This is a logical function that represents the control plane for the radio interface and that can provide triggers (within the RBS) when the interface has free capacity.
Payload Transfer function: This is the payload transfer function L2/L1 adaptation of the stored object in the memory. The exact solution depends on the radio technology used.

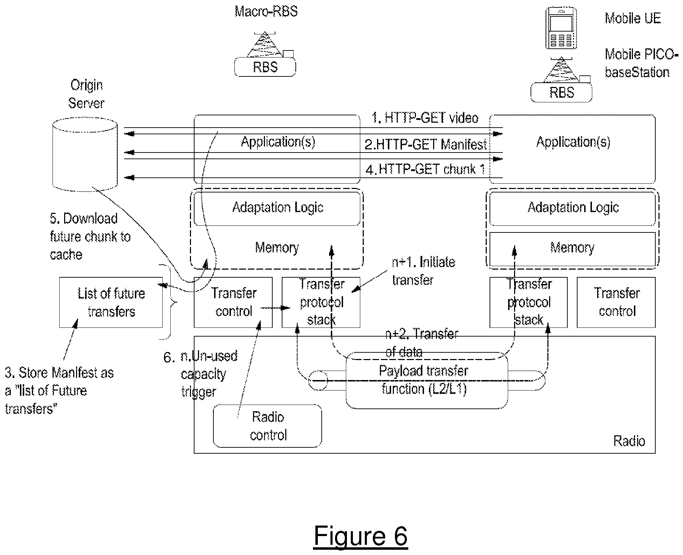

A sequence associated with the transfer of a piece of information, i.e. a streaming video session, might be as follows, further illustrated in Figure 6 which shows an "origin server" as the source of streaming video:
1. HTTP-GET video: The initial request from a client to get a video from the origin server.
2. HTTP-GET Manifest: Download the list of URLs that refer to associated video-chunks.
3. Store the Manifest at the RBS as a "list of Future Transfers": The manifest file includes a list of URLs that refer to associated data chunks.
4. HTTP-GET chunk 1: downloading of the first part of the video from the origin server to the client, via the RBS.
5. Download future chunks that have not yet been requested, from the origin server to the network cache in the RBS. This can be done independently of current or expected excess capacity on the radio interface.
6....
   n: Un-used capacity trigger generated with RBS.
   n+1: Initiate transfer between memories.
   n+2: Transfer of future chunks (RBS → UE) that have not yet been transferred.
   n+3: Transfer chunks (RBS → UE) until the spare radio capacity is fully utilized and/or the local buffer in the client is full.

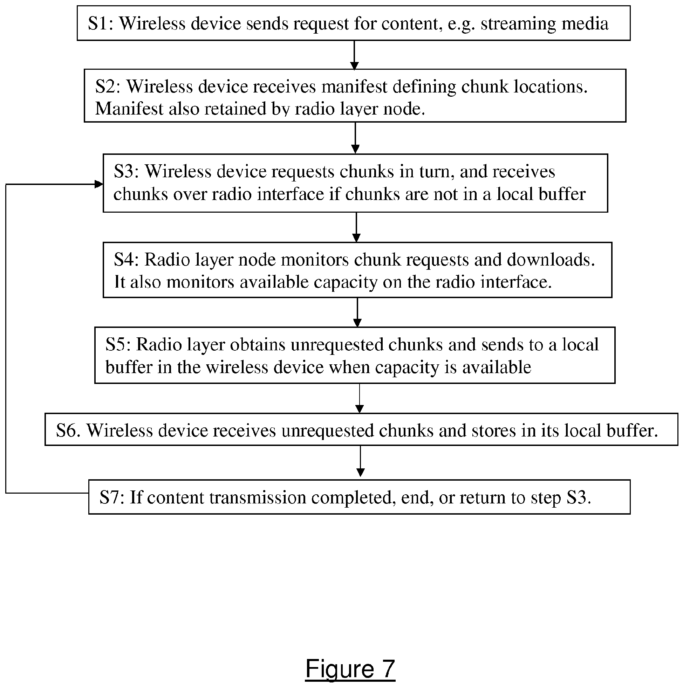

Referring now to Figure 7, this figure is a flow diagram illustrating key steps in the above approach. At step S1, the wireless device (UE) sends the http request to download streaming media from the origin server (i.e. streaming server). This server may be within the Internet, or might possibly be located within the domain of the network operator (indeed, the origin server may be within the radio access network, e.g. co-located with the radio layer node). In response to the request, at step S2 the wireless device receives the manifest defining chunk locations, i.e. by way of respective URLs. For each chunk of the media, the manifest may contain multiple URLs, each corresponding for example to a different coding rate.

At step S3, the wireless device begins selecting chunks, in sequence, from the manifest. The device looks first into its local buffer to see if the request can be fulfilled from the data held in the buffer. If this is not the case, the request including the appropriate URL is sent to the origin server via the radio access network. At step S4, the radio layer node monitors chunk requests and records delivered and requested (in-flight) chunks. It also monitors capacity on the radio link. This capacity is the capacity available to the wireless device taking into account conditions across the cell within which the device is camped.

At step S5, the radio layer obtains future (that is as yet unrequested) chunks from the origin server using the manifest and its record of delivered and in-flight chunks). Once retrieved, the unrequested chunks are saved into a memory of the radio layer node. Depending upon the capacity available towards the wireless device, the radio layer node sends the unrequested chunks to the wireless device. Typically, the unrequested chunks will be sent in sequence. Where the device is making use of a known adaptive streaming mechanism at the application layer allowing the device to choose between different (coding) rates for the same chunk, the radio layer node will typically obtain and deliver unrequested chunks having the highest quality. Of course, it is possible that the radio layer may deliver the same chunk in different rates. [It is possible to employ specific chunk selection methods in order to optimise the total transferred volume. For example, in the case of a moving user that is currently within a high bandwidth hotspot, a small chunk size may be selected in order to transfer as much of a session as possible before the user moves out of the hotspot.]

At step S6, the wireless device receives the unrequested chunks and stores these into its local buffer. Subsequent requests for chunks (step S3) are satisfied, if possible, from the local buffer. The process continues at step S7 until the transfer of the streaming media has been completed.

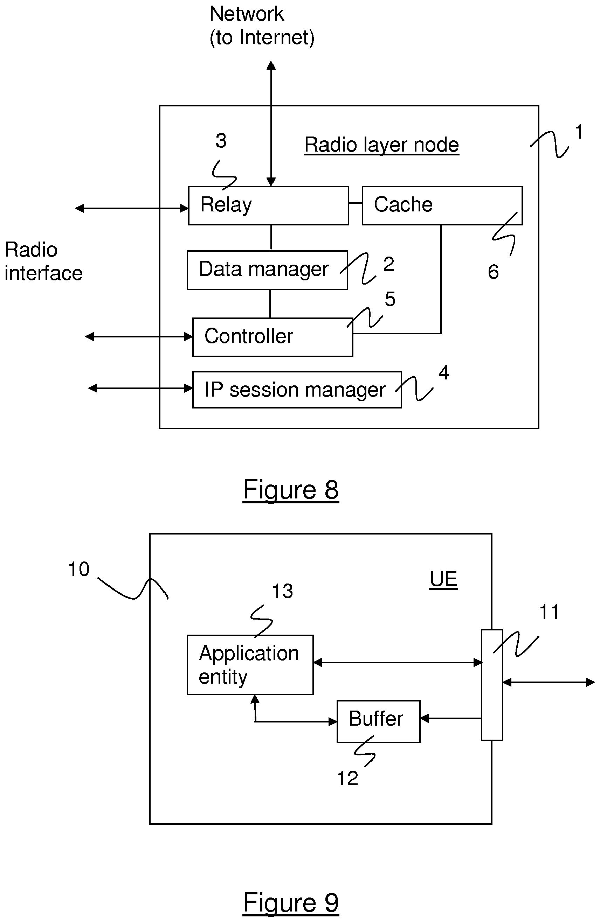

Figure 8 illustrates schematically a radio layer node 1 such as an RNC or eNB. The node sits within the radio layer and comprises hardware including a program memory for storing software. The hardware and software together implement the following components:
A data manager 2 for maintaining a manifest defining download locations for data chunks making up said data block. The data manager 2 may intercept IP traffic sent between the wireless device and the origin server in order to obtain the manifest, or may obtain it independently from the origin server.
A relay 3 for relaying download requests received over the radio interface from the wireless device towards download locations (URLs), and for relaying received requested data chunks to the wireless device over the radio interface.
An Internet Protocol, IP, session manager 4 for establishing a (TCP/)IP connection with the wireless device. This IP connection is independent of and in parallel with the IP connection extending between the wireless device and the origin server, such that parallel streams are received at two different receiving ports of the wireless device. As such, data chunks can be sent simultaneously over the two parallel IP connections and can be handled appropriately by that device.
A controller 5 for monitoring capacity on the radio interface and, if sufficient capacity is available, for sending further data chunks that have not as yet been requested by the wireless device, to the wireless device over the IP connection.
A cache 6 for storing unrequested chunks pending delivery to the wireless device.

Figure 9 illustrates schematically a wireless device (UE) 10 configured for use with the method and radio layer node described above. This device might be a cellular telephone, smartphone, tablet pc, or the like. The device comprises (in addition to conventional features not described here) a radio interface 11 for receiving and sending data between the wireless device and the radio layer node (RBS). The device is provided with a local buffer 12, and an application entity 13 configured to define download locations for data chunks making up a data block requested by the device. This entity is further configured to send download requests to said download locations over said radio interface if the requests cannot be satisfied by the local buffer, and to receive respective requested data chunks over said radio interface. The local buffer is a two port buffer, a first of the ports enabling said application entity to communicate with the buffer and a second of the ports allowing said radio layer to write unrequested data chunks into the buffer.

It is noted that the approach described here need not be an alternative to the known adaptive streaming mechanism such as Apple HTTP Adaptive Streaming. Rather, it can be an enhancement to those approaches. Its application does of course require that a manifest for the media be obtained (by both the radio layer node and the client). This could be achieved either as a result of implementation of the known adaptive streaming mechanism, or as a result of a custom mechanism.

An alternative sequence may be employed in the case of limited UE resources (storage). This involves the UE requesting (from the RBS) only as many chunks as it can handle. Also, if the UE wants a particular resolution or coding rate of the video stream, this can be easily fulfilled. The alternative sequence is as follows:
1. HTTP-GET video: The initial request from a client to get a video from the origin server.
2. HTTP-GET Manifest: Download the list of URLs that refer to associated video-chunks.
3. Store the Manifest at the RBS as a "list of Future Transfers": The manifest file includes a list of URLs that refer to associated data chunks.
4. HTTP-GET chunk 1: downloading of the first part of the video from the origin server to the client, via the RBS.
5. Download future chunks that have not yet been requested, from the origin server to the network cache in the RBS. This can be done independently of current or expected excess capacity on the radio interface.
6. ...
   n: Un-used capacity trigger generated with RBS.
   n+1: Inform adaptation logic in the UE of unused capacity.
   n+2: The adaptation logic in the UE requests future chunks.
   n+3: Transfer future chunks until
      - the spare radio capacity is fully utilized or,
      - the adaptation logic in the UE stops requesting future chunks, or
      - the memory in the UE is full.

According to this alternative sequence, feedback from the UE memory identifying the memory fill-level may be provided to the RBS. If the memory is filled above a specific level, the feedback causes the transfer to stop. A feedback "trigger" may be generated when a received future chunk cannot fit into the un-used space in the UE memory.

It will be appreciated by the person of skill in the art that various modifications may be made to the above described embodiments without departing from the scope of the present invention. For example, embodiments of the invention may be adapted to enable the fast and efficient bulk-transfer of a set of stored items. Given that these transfers are conventionally carried out one by one, a parallel transfer can increase the transfer efficiency, e.g. by establishing multiple TCP connections. The applications to adaptive streaming presented above should therefore be seen as only an example application.

In a further alternative to the embodiments presented above, the "destination node" may not an end-user terminal, i.e. a UE. For example, the destination node may be an "intermediary" node such as a relay node or a mobile pico-basestation. An example of a mobile pico-basestation is a pico-basestation present on a moving platform such as a train or bus and which communicates with the macro-network via a radio interface.

In yet other alternatives to the embodiments described above, the inventive approach may be employed in architectures employing different radio interfaces including, for example, CDMA2000, WiMAX, and IEEE 802.11.

In other example embodiments for streaming servers, chunks may be described by a "byte-range" in HTTP. This means that the chunks are defined by Byte-ranges counted within a "file" to be downloaded, and requests include the byte-range parameters so that only the specified part of the file is downloaded. The approach presented here can be employed so as to download a remaining part of a file, yet to be requested (by the client). In this case, a manifest is not required. Rather, the RBS needs to know only the last transferred part of the file (defined by a range) and the end-of-file. Of course, the whole file may not be transferred. Rather, the RBS may obtain a part of the file, with the amount being defined by a criteria such as an upper bound of memory size or an expected transferred volume (Gbyte).

## Claims

1. A radio layer apparatus (1) for transmitting a given block of data to a wireless device (10) over a radio interface controlled by the radio layer apparatus, the apparatus comprising:
a data manager (2) for defining download locations for data chunks making up said data block;
a relay (3) for relaying download requests received over said radio interface from said wireless device towards said download locations, and for relaying received requested data chunks to the wireless device (10) over said radio interface,
wherein further data chunks that have not yet been requested by the wireless device (10) are downloaded from respective download locations by said data manager, in anticipation of future delivery to the wireless device (10);
an Internet Protocol, IP, session manager (4) for establishing an IP connection with the wireless device (10); and
a controller (5) for monitoring capacity on said radio interface and, if there is sufficient un-used radio capacity available for transmitting the further data chunks at a higher transmission rate, then triggering sending further data chunks that have not as yet been requested by the wireless device (10) using the un-used radio capacity, to the wireless device (10) over said IP connection.

2. The radio layer apparatus according to claim 1, said data manager (2) being configured to define download locations by either maintaining a manifest file defining these locations, or by incrementing a byte counter point to a next download location within said block of data.

3. The radio layer apparatus according to claim 1 or 2, wherein said data manager (2) is configured to maintain a record of data chunks delivered to said wireless device.

4. The radio layer apparatus according to any one of the preceding claims, comprising a cache (6) for storing said further data chunks pending the sending to the wireless device (10), said data manager (2) being configured to download unrequested chunks from respective download locations and to store these chunks in said cache (6).

5. The radio layer apparatus according to any one of the preceding claims, wherein said controller (5) is configured to receive channel quality information from the wireless device (10) and to combine this information with other information collected for the radio interface in order to determine capacity.

6. The radio layer apparatus according to any one of the preceding claims, wherein said controller (5) is configured to receive from said wireless device (10) an indication of the fill level of a local buffer (12) at the wireless device (10), and for performing said sending of further, unrequested data chunks, only if the local buffer (12) fill level permits.

7. The radio layer apparatus according to any one of the preceding claims, the controller (5) being configured to send one or more further unrequested data chunks to the wireless device (10) in parallel with the sending of one or more requested data chunks.

8. A wireless device (10) comprising:
a radio interface (11) for receiving and sending data between the wireless device (10) and a network comprising a radio layer node;
a local buffer (12); and
an application entity (13) configured to define download locations for data chunks making up a data block requested by the wireless device (10), to send download requests to said download locations over said radio interface (11) if the download requests cannot be satisfied by the local buffer (12), and to receive respective requested data chunks over said radio interface (11),
wherein said application entity (13) is configured to receive further data chunks that have not yet been requested by the wireless device (10), in anticipation of future requirement of the further data chunks by the wireless device (10), wherein the received further data chunks being transmitted at a higher transmission rate in an event unused radio capacity is available on said radio interface (11), and
wherein said local buffer (12) is a two port buffer, a first of the ports enabling said application entity (13) to communicate with the local buffer (12) and a second of the ports allowing said radio layer to write the further data chunks into the local buffer (12).

9. A method of transmitting a given block of data to a wireless device (10) over a radio interface controlled by a radio layer node (1), the method comprising:
defining at said radio layer node (1), download locations for data chunks making up said data block;
forwarding download requests, received at the radio layer node (1) from the wireless device (10), to respective download locations, and receiving respective requested data chunks at the radio layer node (1) and forwarding them to the wireless device (10);
receiving, at said radio layer node (1) from respective download locations, further data chunks that have not yet been requested by the wireless device (10) in anticipation of future delivery to the wireless device (10); and at said radio layer node (1), maintaining a record of data chunks requested by the wireless device (10) whilst monitoring capacity on said radio interface and, if there is sufficient un-used radio capacity available for transmitting further data chunks at a higher transmission rate, then triggering sending further data chunks that have not as yet been requested by the wireless device (10) using the un-used radio capacity, to the wireless device (10) over the radio interface using an IP connection established between the radio layer node (1) and the wireless device (10), for storage in a local buffer (12) of the wireless device (10).

10. The method according to claim 9, wherein said download locations are also defined at the wireless device (10), the method comprising storing the received further data chunks that have not yet been requested by the wireless device (10) in said local buffer (12), wherein subsequent requests made for said further chunks at the wireless device (10) are satisfied by extracting those data chunks from the local buffer (12).

11. The method according to claim 9 or 10, wherein said download locations are each defined by a Uniform Resource Locator, URL, stored within a manifest file; and/or
wherein said manifest defines, for each data chunk of said given block of data, a plurality of download locations each of which corresponds to a different coding rate for the data chunk; and/or
wherein said wireless device (10) handles received data chunks according to a streaming protocol.

12. The method according to any one of claims 9 to 11, wherein said wireless device (10) comprises a web browser function responsible for generating a request for said given block of data, the web browser function or a web browser plugin being further responsible for obtaining said manifest and for obtaining data chunks from said local buffer (12) or for sending download requests to said download locations over said radio interface (11).

13. The method according to any one of claims 9 to 12, wherein said step of monitoring capacity on said radio interface (11) comprises receiving at the radio layer node, channel quality information from the wireless device (10) and combining this information with other information collected for the radio interface (11).

14. The method according to any one of claims 9 to 13 and comprising signalling from said wireless device (10) to said radio layer node (1) an indication of the fill level of said local buffer (12), said radio layer node (1) performing said sending of further, unrequested data chunks, only if the local buffer fill level permits.

15. The method according to any one of claims 9 to 14 and comprising sending one or more further unrequested data chunks to the wireless device (10) in parallel with the sending of one or more requested data chunks.

## Patentansprüche

1. Funkschichteinrichtung (1) zum Übertragen eines gegebenen Datenblocks zu einer drahtlosen Vorrichtung (10) über eine Funkschnittstelle, die von der Funkschichteinrichtung gesteuert wird, wobei die Einrichtung Folgendes umfasst:
einen Datenmanager (2) zum Definieren von Downloadstandorten für Datenabschnitte, aus denen der Datenblock besteht;
ein Relais (3) zum Weitergeben von Downloadanforderungen, die über die Funkschnittstelle von der drahtlosen Vorrichtung empfangen werden, zu den Downloadstandorten und zum Weitergeben der empfangenen angeforderten Datenabschnitte zur drahtlosen Vorrichtung (10) über die Funkschnittstelle,
wobei weitere Datenabschnitte, die von der drahtlosen Vorrichtung (10) noch nicht angefordert wurden, in Erwartung der künftigen Lieferung an die drahtlose Vorrichtung (10) vom Datenmanager von jeweiligen Downloadstandorten heruntergeladen werden;
einen IP-Sitzungsmanager (Internet Protocol) (4) zum Herstellen einer IP-Verbindung zur drahtlosen Vorrichtung (10) und
eine Steuerung (5) zum Überwachen der Kapazität an der Funkschnittstelle und, wenn zum Übertragen der weiteren Datenabschnitte mit einer höheren Übertragungsrate ausreichend nicht verwendete Funkkapazität verfügbar ist, Auslösen des Sendens weiterer Datenabschnitte, die von der drahtlosen Vorrichtung (10) noch nicht angefordert wurden, unter Verwendung der nicht verwendeten Funkkapazität über die IP-Verbindung an die drahtlose Vorrichtung (10).

2. Funkschichteinrichtung nach Anspruch 1, wobei der Datenmanager (2) dazu ausgelegt ist, Downloadstandorte zu definieren, entweder durch Unterhalten einer Manifestdatei, die diese Standorte definiert, oder durch Inkrementieren einer Bytezählerstelle zu einem nächsten Downloadstandort innerhalb des Datenblocks.

3. Funkschichteinrichtung nach Anspruch 1 oder 2, wobei der Datenmanager (2) dazu ausgelegt ist, eine Aufzeichnung von Datenabschnitten zu unterhalten, die an die drahtlose Vorrichtung geliefert werden.

4. Funkschichteinrichtung nach einem der vorhergehenden Ansprüche, die einen Zwischenspeicher (6) zum Speichern der weiteren Datenabschnitte, die auf das Senden zur drahtlosen Vorrichtung (10) warten, umfasst, wobei der Datenmanager (2) dazu ausgelegt ist, nicht angeforderte Abschnitte von jeweiligen Downloadstandorten herunterzuladen und diese Abschnitte im Zwischenspeicher (6) zu speichern.

5. Funkschichteinrichtung nach einem der vorhergehenden Ansprüche, wobei die Steuerung (5) dazu ausgelegt ist, von der drahtlosen Vorrichtung (10) Kanalqualitätsinformationen zu empfangen und diese Informationen mit anderen Informationen zu kombinieren, die für die Funkschnittstelle gesammelt wurden, um eine Kapazität zu bestimmen.

6. Funkschichteinrichtung nach einem der vorhergehenden Ansprüche, wobei die Steuerung (5) dazu ausgelegt ist, von der drahtlosen Vorrichtung (10) eine Anzeige des Füllstands eines lokalen Puffers (12) an der drahtlosen Vorrichtung (10) zu empfangen und das Senden weiterer nicht angeforderter Datenabschnitte nur durchzuführen, wenn der Füllstand des lokalen Puffers (12) dies zulässt.

7. Funkschichteinrichtung nach einem der vorhergehenden Ansprüche, wobei die Steuerung (5) dazu ausgelegt ist, parallel zum Senden von einem oder mehreren angeforderten Datenabschnitten einen oder mehrere weitere nicht angeforderte Datenabschnitte an die drahtlose Vorrichtung (10) zu senden.

8. Drahtlose Vorrichtung (10), die Folgendes umfasst:
eine Funkschnittstelle (11) zum Empfangen und Senden von Daten zwischen der drahtlosen Vorrichtung (10) und einem Netzwerk, das einen Funkschichtknoten umfasst;
einen lokalen Puffer (12) und
eine Anwendungsentität (13), die dazu ausgelegt ist, Downloadstandorte für Datenabschnitte zu definieren, aus denen ein Datenblock besteht, der von der drahtlosen Vorrichtung (10) angefordert wird, Downloadanforderungen über die Funkschnittstelle (11) an die Downloadstandorte zu senden, wenn die Downloadanforderungen vom lokalen Puffer (12) nicht erfüllt werden können, und über die Funkschnittstelle (11) jeweilige angeforderte Datenabschnitte zu empfangen,
wobei die Anwendungsentität (13) dazu ausgelegt ist, in Erwartung einer künftigen Anforderung der weiteren Datenabschnitte durch die drahtlose Vorrichtung (10) weitere Datenabschnitte zu empfangen, die von der drahtlosen Vorrichtung (10) noch nicht angefordert wurden, wobei die empfangenen weiteren Datenabschnitte in einem Fall, in dem an der Funkschnittstelle (11) nicht verwendete Funkkapazität verfügbar ist, mit einer höheren Übertragungsrate übertragen werden und
wobei der lokale Puffer (12) ein Zweiportpuffer ist, wobei ein erster der Ports es der Anwendungsentität (13) erlaubt, mit dem lokalen Puffer (12) zu kommunizieren, und ein zweiter der Ports der Funkschicht gestattet, die weiteren Datenabschnitte in den lokalen Puffer (12) zu schreiben.

9. Verfahren zum Übertragen eines gegebenen Datenblocks zu einer drahtlosen Vorrichtung (10) über eine Funkschnittstelle, die von einem Funkschichtknoten (1) gesteuert wird, wobei das Verfahren Folgendes umfasst:
Definieren am Funkschichtknoten (1) von Downloadstandorten für Datenabschnitte, aus denen der Datenblock besteht;
Weiterleiten von Downloadanforderungen, die am Funkschichtknoten (1) von der drahtlosen Vorrichtung (10) empfangen werden, an jeweilige Downloadstandorte und Empfangen jeweiliger angeforderter Datenabschnitte am Funkschichtknoten (1) und Weiterleiten dieser zur drahtlosen Vorrichtung (10);
in Erwartung der künftigen Lieferung an die drahtlose Vorrichtung (10) Empfangen am Funkschichtknoten (1) weiterer Datenabschnitte, die von der drahtlosen Vorrichtung (10) noch nicht angefordert wurden, von jeweiligen Downloadstandorten und
Unterhalten am Funkschichtknoten (1) einer Aufzeichnung von Datenabschnitten, die von der drahtlosen Vorrichtung (10) angefordert wurden, während die Kapazität an der Funkschnittstelle überwacht wird, und, wenn zum Übertragen weiterer Datenabschnitte mit einer höheren Übertragungsrate ausreichend nicht verwendete Funkkapazität verfügbar ist, Auslösen des Sendens weiterer Datenabschnitte, die von der drahtlosen Vorrichtung (10) noch nicht angefordert wurden, unter Verwendung der nicht verwendeten Funkkapazität über die Funkschnittstelle unter Verwendung einer IP-Verbindung, die zwischen dem Funkschichtknoten (1) und der drahtlosen Vorrichtung (10) hergestellt wird, an die drahtlose Vorrichtung (10) zum Speichern in einem lokalen Puffer (12) der drahtlosen Vorrichtung (10).

10. Verfahren nach Anspruch 9, wobei die Downloadstandorte auch an der drahtlosen Vorrichtung (10) definiert sind, wobei das Verfahren das Speichern der empfangenen weiteren Datenabschnitte, die von der drahtlosen Vorrichtung (10) noch nicht angefordert wurden, im lokalen Puffer (12) umfasst, wobei spätere Anforderungen der weiteren Abschnitte durch die drahtlose Vorrichtung (10) durch Extrahieren dieser Datenabschnitte aus dem lokalen Puffer (12) erfüllt werden.

11. Verfahren nach Anspruch 9 oder 10, wobei die Downloadstandorte jeweils durch einen in einer Manifestdatei gespeicherten Uniform Resource Locator, URL, definiert sind und/oder
wobei das Manifest für jeden Datenabschnitt des gegebenen Datenblocks eine Vielzahl von Downloadstandorten definiert, von denen jeder einer anderen Codierungsrate für den Datenabschnitt entspricht; und/oder
wobei die drahtlose Vorrichtung (10) die empfangenen Datenabschnitte gemäß einem Streamingprotokoll handhabt.

12. Verfahren nach einem der Ansprüche 9 bis 11, wobei die drahtlose Vorrichtung (10) eine Webbrowserfunktion umfasst, die für das Erzeugen einer Anforderung für den gegebenen Datenblock zuständig ist, wobei die Webbrowserfunktion oder ein Webbrowser-Plugin ferner dafür zuständig ist, das Manifest zu erhalten und Datenabschnitte vom lokalen Puffer (12) zu erhalten oder Downloadanforderungen über die Funkschnittstelle (11) an die Downloadstandorte zu senden.

13. Verfahren nach einem der Ansprüche 9 bis 12, wobei der Schritt des Überwachens der Kapazität an der Funkschnittstelle (11) das Empfangen von Kanalqualitätsinformationen von der drahtlosen Vorrichtung (10) am Funkschichtknoten und das Kombinieren dieser Informationen mit anderen Informationen, die für die Funkschnittstelle (11) gesammelt werden, umfasst.

14. Verfahren nach einem der Ansprüche 9 bis 13, das ein Signalisieren einer Anzeige des Füllstands des lokalen Puffers (12) von der drahtlosen Vorrichtung (10) an den Funkschichtknoten (1) umfasst, wobei der Funkschichtknoten (1) das Senden weiterer nicht angeforderter Datenabschnitte nur durchführt, wenn der Füllstand des lokalen Puffers dies zulässt.

15. Verfahren nach einem der Ansprüche 9 bis 14, das das Senden eines oder mehrerer weiterer nicht angeforderter Datenabschnitte an die drahtlose Vorrichtung (10) parallel zum Senden eines oder mehrerer angeforderter Datenabschnitte umfasst.

## Revendications

1. Appareil de couche radio (1) pour transmettre un bloc de données déterminé vers un dispositif sans fil (10) sur une interface radio contrôlée par l'appareil de couche radio, l'appareil comprenant :
un gestionnaire de données (2) destiné à définir des emplacements de téléchargement pour des segments de données composant ledit bloc de données ;
un relais (3) destiné à relayer des demandes de téléchargement reçues sur ladite interface radio depuis ledit dispositif sans fil vers lesdits emplacements de téléchargement, et à relayer les segments de données demandés et reçus vers le dispositif sans fil (10) sur ladite interface radio,
dans lequel des segments de données supplémentaires qui n'ont pas encore été demandés par ledit dispositif sans fil (10) sont téléchargés depuis des emplacements de téléchargement respectifs par ledit gestionnaire de données, en prévision d'une livraison ultérieure au dispositif sans fil (10) ;
un gestionnaire de sessions Internet Protocol, IP, (4) destiné à établir une connexion IP avec le dispositif sans fil (10) ; et
un contrôleur (5) destiné à surveiller la capacité sur ladite interface radio et, s'il y a suffisamment de capacité radio inutilisée disponible pour transmettre les segments de données supplémentaires à un débit de transmission supérieur, déclencher l'envoi de segments de données supplémentaires qui n'ont pas encore été demandés par le dispositif sans fil (10) en utilisant la capacité radio inutilisée, vers le dispositif sans fil (10) sur ladite connexion IP.

2. Appareil de couche radio selon la revendication 1, ledit gestionnaire de données (2) étant configuré pour définir des emplacements de téléchargement soit en gérant un fichier manifeste définissant ces emplacements, soit en incrémentant un compteur d'octets pointant vers un emplacement de téléchargement suivant dans ledit bloc de données.

3. Appareil de couche radio selon la revendication 1 ou 2, dans lequel ledit gestionnaire de données (2) est configuré pour gérer un enregistrement de segments de données délivrés audit dispositif sans fil.

4. Appareil de couche radio selon l'une quelconque des revendications précédentes, comprenant une mémoire cache (6) destinée à stocker lesdits segments de données supplémentaires dans l'attente de leur envoi vers le dispositif sans fil (10), ledit gestionnaire de données (2) étant configuré pour télécharger des segments non demandés depuis des emplacements de téléchargement respectifs et pour stocker ces segments dans ladite mémoire cache (6).

5. Appareil de couche radio selon l'une quelconque des revendications précédentes, dans lequel ledit contrôleur (5) est configuré pour recevoir des informations de qualité de canaux en provenance du dispositif sans fil (10) et pour combiner ces informations avec d'autres informations recueillies à propos de l'interface radio afin de déterminer la capacité.

6. Appareil de couche radio selon l'une quelconque des revendications précédentes, dans lequel ledit contrôleur (5) est configuré pour recevoir dudit dispositif sans fil (10) une indication du niveau de remplissage d'un tampon local (12) au niveau du dispositif sans fil (10) et pour effectuer ledit envoi de segments de données supplémentaires non demandés uniquement si le niveau de remplissage du tampon local (12) le permet.

7. Appareil de couche radio selon l'une quelconque des revendications précédentes, le contrôleur (5) étant configuré pour envoyer un ou plusieurs segments de données supplémentaires non demandés au dispositif sans fil (10) parallèlement à l'envoi d'un ou plusieurs segments de données demandés.

8. Dispositif sans fil (10) comprenant :
une interface radio (11) pour recevoir et envoyer des données entre le dispositif sans fil (10) et un réseau comprenant un noeud de couche radio ;
un tampon local (12) ; et
une entité d'application (13) configurée pour définir des emplacements de téléchargement pour des segments de données composant un bloc de données demandé par le dispositif sans fil (10), pour envoyer des demandes de téléchargement vers lesdits emplacements de téléchargement sur ladite interface radio (11) si les demandes de téléchargement ne peuvent pas être satisfaites par le tampon local (12), et pour recevoir des segments de données demandés respectifs sur ladite interface radio (11) ;
dans lequel ladite entité d'application (13) est configurée pour recevoir des segments de données supplémentaires qui n'ont pas encore été demandés par le dispositif sans fil (10), en prévision d'une demande ultérieure des segments de données supplémentaires par le dispositif sans fil (10), dans lequel les segments de données supplémentaires reçus sont transmis à un débit de transmission supérieur dans l'éventualité où une capacité radio inutilisée est disponible sur ladite interface radio (11), et
dans lequel ledit tampon local (12) est un tampon à deux ports, un premier des ports permettant à ladite entité d'application (13) de communiquer avec le tampon local (12) et un second des ports permettant à ladite couche radio d'écrire les segments de données supplémentaires dans le tampon local (12).

9. Procédé de transmission d'un bloc de données déterminé vers un dispositif sans fil (10) sur une interface radio contrôlée par un noeud de couche radio (1), le procédé comprenant les étapes consistant à :
définir au niveau dudit noeud de couche radio (1) des emplacements de téléchargement pour des segments de données composant ledit bloc de données ;
transférer des demandes de téléchargement, reçues au niveau du noeud de couche radio (1) à partir du dispositif sans fil (10), vers des emplacements de téléchargement respectifs, et recevoir des segments de données demandés respectifs au niveau du noeud de couche radio (1) et les transférer vers le dispositif sans fil (10) ;
recevoir, au niveau dudit noeud de couche radio (1) à partir d'emplacements de téléchargement respectifs, des segments de données supplémentaires qui n'ont pas encore été demandés par le dispositif sans fil (10) en prévision d'un livraison ultérieure au dispositif sans fil (10) ; et
au niveau dudit noeud de couche radio (1), gérer un enregistrement de segments de données demandés par le dispositif sans fil (10) tout en surveillant la capacité sur ladite interface radio et, s'il y a suffisamment de capacité radio inutilisée disponible pour transmettre des segments de données supplémentaires à un débit de transmission supérieur, déclencher l'envoi de segments de données supplémentaires qui n'ont pas encore été demandés par le dispositif sans fil (10) en exploitant la capacité radio inutilisée, vers le dispositif sans fil (10) sur l'interface radio en utilisant une connexion IP établie entre le noeud de couche radio (1) et le dispositif sans fil (10), en vue de leur stockage dans un tampon local (12) du dispositif sans fil (10).

10. Procédé selon la revendication 9, dans lequel lesdits emplacements de téléchargement sont également définis au niveau du dispositif sans fil (10), le procédé comprenant le stockage des segments de données supplémentaires reçus qui n'ont pas encore été demandés par le dispositif sans fil (10) dans ledit tampon local (12), dans lequel des demandes postérieures portant sur lesdits segments supplémentaires au niveau du dispositif sans fil (10) sont satisfaites en extrayant ces segments de données à partir du tampon local (12).

11. Procédé selon la revendication 9 ou 10, dans lequel lesdits emplacements de téléchargement sont chacun définis par un localisateur uniforme de ressources, URL, stocké dans un fichier manifeste ; et/ou
dans lequel ledit manifeste définit, pour chaque segment de données dudit bloc de données déterminé, une pluralité d'emplacements de téléchargement dont chacun correspond à un taux de codage différent pour le segment de données ; et/ou
dans lequel ledit dispositif sans fil (10) traite des segments de données reçus conformément à un protocole de diffusion continue.

12. Procédé selon l'une quelconque des revendications 9 à 11, dans lequel ledit dispositif sans fil (10) comprend une fonction de navigateur web chargée de générer une demande dudit bloc de données déterminé, la fonction de navigateur web ou une extension de navigateur web étant en outre chargée d'obtenir ledit manifeste et d'obtenir des segments de données à partir dudit tampon local (12) ou d'envoyer des demandes de téléchargement vers lesdits emplacements de téléchargement sur ladite interface radio (11).

13. Procédé selon l'une quelconque des revendications 9 à 12, dans lequel ladite étape de surveillance de la capacité sur ladite interface radio (11) comprend la réception, au niveau du noeud de couche radio, d'informations de qualité de canaux en provenance du dispositif sans fil (10) et la combinaison de ces informations avec d'autres informations recueillies à propos de l'interface radio (11).

14. Procédé selon l'une quelconque des revendications 9 à 13 et comprenant la signalisation, depuis ledit dispositif sans fil (10) vers ledit noeud de couche radio (1), d'une indication du niveau de remplissage dudit tampon local (12), ledit noeud de couche radio (1) effectuant ledit envoi de segments de données supplémentaires non demandés uniquement si le niveau de remplissage du tampon local le permet.

15. Procédé selon l'une quelconque des revendications 9 à 14 et comprenant l'envoi d'un ou plusieurs segments de données supplémentaires non demandés au dispositif sans fil (10) parallèlement à l'envoi d'un ou plusieurs segments de données demandés.
